# EUROPEAN PATENT SPECIFICATION

(11) **EP 4 127 279 B1**
(45) Date of publication and mention of the grant of the patent: **28.08.2024**
(21) Application number: 21720083.1
(22) Date of filing: 26.03.2021
(51) Int. Cl.: D01D 5/247, D01F 1/08, D01F 6/30, B29C 44/34

(54) **FOAMABLE CONTINUOUS FILAMENTS**
SCHÄUMBARE ENDLOSFÄDEN
FILAMENTS CONTINUS EXPANSIBLES

(30) Priority: 27.03.2020 US 202063000668 P
(43) Date of publication of application: 08.02.2023
(73) Proprietor: Zephyros, Inc., Romeo, MI 48065 (US)
(72) Inventor: CZAPLICKI, Michael, Romeo, MI 48065 (US); APFEL, Jeff, Romeo, MI 48065 (US)
(74) Representative: Kutzenberger Wolff & Partner
(86) International application number: PCT/US2021/024362
(87) International publication number: WO 2021/195498

(56) References cited:
- WO-A1-2014/026926
- WO-A1-2014/092577
- WO-A1-2015/190920
- WO-A1-2019/037746
- WO-A1-2021/101789
- WO-A1-2021/130619
- WO-A2-2006/102149
- US-A- 3 694 873
- CHEN SINING ET AL: "Research on thermal decomposition characteristics of H foaming agent with different moisture contents", JOURNAL OF LOSS PREVENTION IN THE PROCESS INDUSTRIES, ELSEVIER, UNITED KINGDOM, vol. 66, 7 May 2020 (2020-05-07), XP086230992, ISSN: 0950-4230, [retrieved on 20200507], DOI: 10.1016/J.JLP.2020.104164
- DATABASE WPI Week 201804, Derwent World Patents Index; AN 2017-77229L, XP002803408

## Description

### FIELD OF INVENTION

**The** present teachings relate generally to foamable materials. More particularly, the present teachings relate to polymeric filaments that are adapted to foam upon exposure to a stimulus.

### BACKGROUND

Foamed materials are useful in cushioning, energy absorption, and insulation applications. Certain foamed materials are compressible, allowing dissipation of energy, storage of energy, or a combination of both. Foamed materials can allow stress distribution contributing increased comfort in applications such as seat cushions, mattresses, pillows and certain items of apparel. Foamable material in the form of a filament can be woven, knitted or otherwise incorporated into fabrics allowing for a foamed material that can conform to the contour of complex shapes and surfaces. When woven, knitted, printed or otherwise formed together with other materials, followed by a foaming step, the foamed filament may adhere to itself or the other material resulting in a final composition with properties of both materials, or to act as a binder for non-adhesion developing ingredients.

The production of foamable filaments can present certain challenges. Namely, it may be desirable that the filaments are adapted to foam upon exposure to heat but the temperature for foaming should not be so high that it causes damage or stress to any material incorporated with the filament. Furthermore, the filaments may be foamed by an extrusion process which also requires heating, but the extrusion temperature must be below the temperature at which the filaments foam, to avoid premature foaming.

The filament, after foaming, can form a foam with an open cell configuration, closed cell configuration, or some combination of open and closed cells. The term "closed cell" indicates that the gas filled chambers or cells of the foam structure are completely encapsulated by polymeric material with no connectivity between cells and no or only very slow exchange of gas between cells. The term "open cell" indicates that the cells of the foamed structure are connected by pathways that allow relatively unrestricted flow of gas between cells. Both types of foams are capable of providing cushioning and energy absorption but function by slightly different mechanisms. Closed cell foams cushion primarily through compression of the gasses trapped inside the closed cells of the foam with the cells functioning as miniature airbags or air springs. As such, closed cell foams under sustained load and high temperature, may be prone to compression set resulting from gases leaving or diffusing from the cells when the foam is compressed for extended periods and/or exposed to elevated temperatures.

Open cell foams can also provide cushioning and energy absorption. However, the cushioning and energy absorption properties of the open cell foam are not the result of compression of gases within the cells but are dictated by the properties of the polymeric materials composing the cell walls of the polymeric cellular foam material. The foamed material can be made more easily compressible or more resistant to compression by proper selection of the modulus of elasticity of the polymer or polymer blends forming the cell wall, and the degree of porosity of the material.

The compressibility of the cellular foam may also be controlled through the cured density of the foamed material.

The present teachings relate to polymers and polymeric blends that can be compounded and formed into a filament or a fiber (either comprising a single composition or multiple compositions), the filament being incorporated into an article of manufacture and then foamed in a subsequent step. The resulting foamed structure may be substantially open cell. The resulting foamed structure may be substantially closed cell. The hardness of the foam structure may be highly tunable through selection of the polymeric composition of the cell wall materials and through control of the final foam density.

WO 2019/037746 A1, WO 2015/190920 A1 and US 3,694,873 describe polymer compositions suitable for producing continuous foamed filaments.

### SUMMARY OF INVENTION

The present invention relates to a foamable filament composition comprising a single polymer or blend of polymers and a foaming agent having an activation temperature, as defined in claim 1. Preferred embodiments are defined in claims 2-14.

The single polymer or blend of polymers has a sufficient molecular weight to allow for polymer chain entanglement and the single polymer or blend of polymers is melt-processable at a temperature sufficiently below the activation temperature of the foaming agent for forming a resulting filament to avoid foaming activation during filament formation.

The single polymer or blend of polymers is selected from the group comprising: ethylene octene copolymers, thermoplastic polyurethanes, ethylene propylene diene monomer rubber, styrene-isoprene block copolymers, poly(styrenebutadiene-styrene), styrene-ethylene-butylene-styrene, nitrile rubber, styrene butadiene rubber, or combinations thereof.

The single polymer or blend of polymers may be melt processable at temperatures of less than 204 °C (400 °F), less than 177 °C (350 °F), less than 149 °C (300 °F), or even less than 104 °C (220 °F). The single polymer or blend of polymers may comprise an ethylene octene having an uncured density of from about 0.7 g/cm³ to about 0.99 g/cm³. The single polymer or blend of polymers may comprise a blend of at least two ethylene octene polymers, each having an uncured density of from about 0.7 g/cm³ to about 0.99 g/cm³. The single polymer or blend of polymers may comprise a rubber or blend of rubbers having an uncured density of from about 0.5 g/cm³ to about 1.5 g/cm³. The resulting filament may have a density post-foaming of from about 0.01 g/cm³ to about 1.5 g/cm³. The resulting filament may have a density post-foaming of from about 0.1 g/cm³ to about 0.5 g/cm³.

The resulting filament may have an Asker C foamed hardness of from about 1 to about 100. The resulting filament may have an Asker C foamed hardness of from 5 to 60. The resulting filament may have an Asker C foamed hardness of from 20 to 60. The resulting filament may have an Asker C foamed hardness of from about 40 to about 65. The resulting filament may have an average cell size post-foaming of from about 0.1 mm to about 2.0 mm. The resulting filament may have an average cell size post-foaming of from about 0.2 mm to about 0.4 mm. The resulting filament may have an average cell size post-foaming of from about 0.3 mm to about 2.0 mm.

The activation temperature of the foaming agent is from 110 °C to 200 °C. The activation temperature of the foaming agent may be from 135 °C to 160 °C.

The resulting filament may have a diameter in the range of from 0.1 mm to 1.5 mm. The resulting filament may have a diameter in the range of from about 0.8 mm to about 1.2 mm.

**The** resulting filament may be woven with one or more additional filaments of the same composition as the resulting filament. The resulting filament may be woven with one or more additional filaments of a different composition as the resulting filament. The resulting filament may be at least partially or substantially an open cell material.

The composition may include a particulate component. The composition may include a particulate component and the particulate component has a diameter that is between one fifth (1/5^{th}) of the diameter of the unfoamed filament diameter and one twentieth (1/20^{th}) of the diameter of the unfoamed filament diameter. The composition may include a particulate component and the particulate component may have a diameter that is less than one twentieth (1/20^{th}), less than one one hundredth (1/100^{th}), or even less than one one thousandth (1/1000^{th}) of the diameter of the unfoamed filament diameter.

The single polymer or blend of polymers may have a softening point or melting point of less than 120 °C, less than 100 °C, or less than 80 °C.

The foaming agent may be a chemical foaming agent. The single polymer or blend of polymers include metallocene catalyzed polymerized copolymers of ethylene and higher molecular weight olefin monomers selected from propylene, butene, hexene and octene. The composition may include a copolymer having a melt index of less than 5g/10 minutes. The composition may include a copolymer of ethylene having a melt index of greater than 20g/10 minutes.

The composition may include one or more copolymers selected so that Asker C hardness of the foamed composition is less than 40. The composition may include one or more copolymers selected so that Asker C hardness of the foamed composition is less than 30.

The water absorption of the composition by weight percent may be from about 0.2 to about 1.2. The compression set of the composition may be from 10% to 15% change at 21 °C as measured in accordance with ASTM D3574-17 Test D. The compression set of the composition may be from 28% to 32% change at 43 °C as measured in accordance with ASTM D3574-17 Test D. The compression set of the composition may be from 30% to 38% change at 54 °C as measured in accordance with ASTM D3574-17 Test D.

The amount of foaming agent utilized may be from about 0.5% to 4% by weight. A physical blowing agent may be utilized so that an expanded composition has a matte finish. During extrusion the filament may have a die swell ratio percentage of less than 100%, less than 80%, less than 60%, less than 40%, or even less than 20%.

The composition may comprise a single polymer or blend of polymers and a foaming agent. The filament itself may comprise a single polymer or blend of polymers and a foaming agent. The composition can be extruded or spun into a filament at a temperature above the melting point of the polymer or polymer blend but below the activation temperature of the foaming agent. The foamable filament may be activated to form the foamed material by heat or another stimulus. The hardness and compressibility of the resulting foam structure may be tunable based on polymer selection and the level of foaming.

The invention further relates to a method of manufacturing a foamable filament, as described in claim 15, including melt compounding the composition and extruding the composition to form the foamable filament. Disclosed herein is tea method comprising stitching a fabric with the foamable filaments as described herein and foaming the filament after stitching. Also disclosed herein is the use of the foamable filament as described herein to weave, knit, inlay, crochet, braid, 3-D print, or create a non-woven fabric.

### BRIEF DESCRIPTION OF THE DRAWINGS

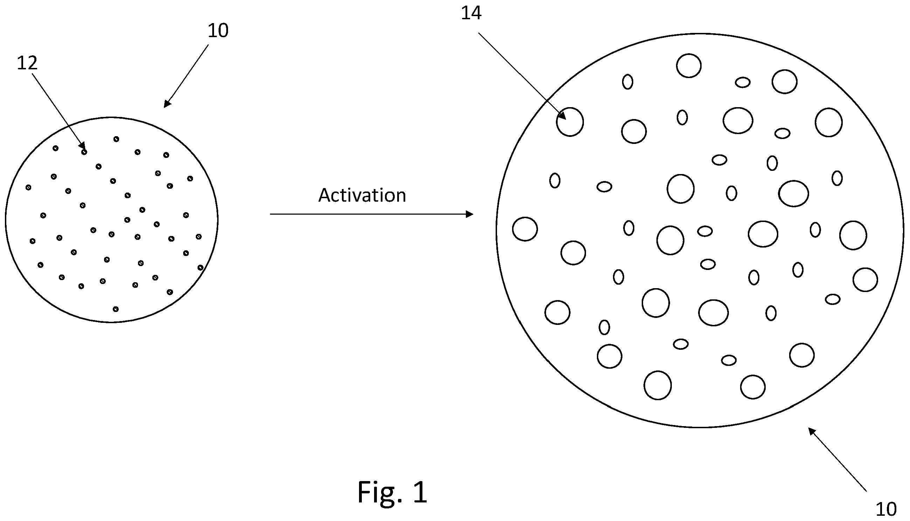

Fig. 1 shows a cross-sectional view of a filament in accordance with the present teachings shown prior to and after foaming.

### DETAILED DESCRIPTION OF THE INVENTION

The explanations and illustrations presented herein are intended to acquaint others skilled in the art with the invention, its principles, and its practical application. Accordingly, the specific embodiments of the present disclosure as set forth are not intended as being exhaustive or limiting of the invention. The scope of the invention should, therefore, be determined not with reference to the above description, but should instead be determined with reference to the appended claims.

The teachings herein are directed to a polymeric filament for use in the construction of one or more of textiles, shoes, sporting equipment and accessories, furniture, outdoor equipment, or vehicle interiors. The filament may be woven with additional filaments of like composition or woven with filaments having a different composition. The filaments may be used as a means to stitch together one or more materials or surfaces or to provide a decorative surface. The filaments may be formed into a mesh material.

The foamable filament composition comprises a single polymer or blend of polymers and a blowing (e.g., foaming) agent. Polymers suitable for use in the invention may be those available as solid materials, non-blocking pellets, chunks, crumbs, bales or pieces. The polymer or blend of polymers may include but is not limited to thermoplastic polyurethanes, elastomers, polyamides, polyesters, styrenic block copolymers, and polyolefins. Styrenic block polymers may include block copolymers of styrene with isoprene, butadiene, ethylene butylene, ethylene propene or some combination thereof. Particular block copolymers of styrene that may be suitable for use for the filaments described herein are available under the tradename Kraton. Examples of suitable polyolefins may be copolymers of ethylene including EPDM elastomers (examples available under the tradename Nordel), and copolymers of ethylene and a polar monomer such as vinyl acetate, methyl acrylate or butyl acrylate. Suitable ethylene copolymers are available under the tradenames Elvax, Elvaloy, Evatane, Lotryl, Orevac, or Ateva available from Dow, Arkema and Celanese.

The filament may be formed by extruding the polymer or blend of polymers alone. The filament may be formed by co-extruding the foamable material over a non-foamable filament. It is possible that the filament may be a bi-component fiber. The foamable portion may be on the interior or exterior of the filament, or both. Optionally both components may be foamable. The bicomponent filament may be formed by drawing a formed filament through the foamable material (along the interior or exterior). The bi-component fiber may be made by simultaneous melt extrusion through a die. For example, a process analogous to a polymeric coating on an electrical wire may be utilized. There may be a desire to include the foamable material on the interior of the bicomponent fiber to avoid slip during a manufacturing process or for UV resistance.

It is also possible that one or more components of the bi-component filament are incorporated to provide strength and stiffness to the combination of components such that the filament undergoes less stretching or breakage in subsequent processing steps such as weaving or knitting. If it is necessary or desirable for a single component foamable filament to be used it may be preferrable for the foamable filament to have high modulus and tensile stress at break to enable secondary processing of the filament into articles.

Examples of selected compositions for filaments formed of the polymer or polymer blends described herein are shown at Table 1.

**Table 1**

| | Example 1 | Example 2 | Example 3 | Example 4 | Example 5 | Example 6 | Example 7 | Example 8 | Example 9 |
|---|---|---|---|---|---|---|---|---|---|
| Primary Polymer Type | TPU | EPDM | SBS | SIS | SEBS | Ethylene Propylene Copolymer | Ethylene Octene Copolymer | NBR | SBR |
| Ethylene Octene Copolymer A | | | | | | | 57.55 | | |
| Ethylene Octene Copolymer B | | | | | | | 15 | | |
| Nitrile Rubber, Nitrile Content 33% | | | | | | | | 55 | |
| Liquid Nitrile | | | | | | | | 21 | |
| SBR Rubber, 23.5% Styrene | | | | | | | | | 50 |
| Thermoplastic Polyurethane | 75.4 | | | | | | | | |
| EPDM, Ethylene content 70% | | 45.15 | | | | | | | |
| Liquid EPDM | | 8 | | | | | | | |
| Ethylene Octene | | 12 | 10.75 | | | 10 | | | 10.75 |
| SIS Block Copolymer | | | | 57.75 | | | | | |
| SBS Block Polymer | | | 50 | | | | | | |
| SEBS Block Copolymer | | | | | 62.75 | | | | |
| Propylene Ethylene Copolymer | | | | | | 64.35 | | | |
| C9 Hydrocarbon | | 8 | | | | | | | |
| C9 Hydrocarbon | | | 11.3 | 16.5 | 13.5 | | | | 11.3 |
| Foaming agent 4,4'-oxybis(benzenesu lfonylhydrazide) | 3 | 3 | 3 | 3 | 3 | 3 | 3 | 6 | 3 |
| Urea Activator | | | | | | | 0.35 | 0.8 | |
| 1,1-Di(tert-butylperoxy)-3,3,5-trimethylcyclohex ane, 40% active | 1.5 | 1.0 | | | | 1.5 | | 1 | 1 |
| Zinc Diacrylate Masterbatch In EPDM, 75% Active | | 0.4 | 0.7 | 1 | | 0.4 | | 1.75 | 0.7 |
| Limestone ∼ 2 Micron Diameter | 20 | 20.5 | 20 | 20 | 20 | 20 | 20.5 | | 19 |
| Oleamide Slip Agent | | 1.2 | 0.5 | 1 | | | 0.4 | | 0.5 |
| Paraffinic Process Oil | | | 3 | | | | 1.5 | | 3 |
| Precipitated Silica | | | | | | | | 395 | |
| Antioxidant | | 0.7 | 0.7 | 0.7 | 0.7 | 0.65 | 0.5 | 0.5 | 0.7 |
| UV Stabilizer | | | | | | | 0.4 | | |
| Light Stabilizer | | | | | | | 0.8 | | |
| Polyethylene Wax | | | | | | | | 10 | |
| Pigment | 0.1 | 0.05 | 0.05 | 0.05 | 0.05 | 0.1 | | | 0.05 |
| | 100 | 100 | 100 | 100 | 100 | 100 | 100 | 100 | 100 |

The extrusion characteristics, cell size of foam, and Asker C values of the examples from Table 1 are shown below at Table 2.

**Table 2**

| Ability to Extrude into a Filament | Example 1 | Example 2 | Example 3 | Example 4 | Example 5 | Example 6 | Example 7 | Example 8 | Example 9 |
|---|---|---|---|---|---|---|---|---|---|
| <1mm | Yes | Yes | Yes | NO | NO | Yes | Yes | Yes | Yes |
| 1.5mm | Yes | Yes | Yes | Yes | NO | Yes | Yes | Yes | Yes |
| 2.5mm | Yes | Yes | Yes | Yes | NO | Yes | Yes | Yes | Yes |
| Expansion on 2.5mm Filament, 315 | 300% | 154% | 171% | 333% | N/A | 300% | 330% | 321% | 249% |
| °F for 15 minutes | | | | | | | | | |
| Filament Uncured Density | 1.3 | 0.99 | 1.13 | 1.13 g/cc | N/A | 1.05 g/cc | 1.04 g/cc | 0.99 g/cc | 1.09 g/cc |
| Bead | 2.18mm die opening | 2.18mm and 1.19mm | 2.18mm and 1.19mm | 2.18mm and 1.19mm | 2.18mm and 1.19mm | 2.18mm and 1.19mm | 2.18mm and 1.19mm | 2.18mm and 1.19mm | 2.18mm and 1.19mm |
| Die | 195°F | 200°F | 200°F | 210°F | 190°F | 200°F | 185°F | 190°F | 190°F |
| RPM | 15 | 16 / 5 | 11 / 4 | 12 / 4 | 0.5 | 15 / 5 | 15 / 5 | 10 / 2 | 8 / 8 |
| Head Pressure, psi, 2.18 mm die / 1.19 die | 1400 | 1400 / 2000 | 1800 / 3800 | 1200 / 4000 | 3200 to 3600 | 1200 / 2200 | 800 / 1400 | 1200 / 1000 | 1200 / 3200 |
| Asker C hardness of expanded foam | 80 | 40 to 45 | 55 to 60 | 16 | 70 to 80 | 60 to 65 | 40 to 45 | 4 to 7 | 13 |
| Average Cell Size, mm (measured on cured plaque) | 0.27 | 0.57 | 0.73 | 0.83 | 0.66 | 1.82 | 0.50 | 0.48 | 0.27 |
| Standard Deviation | 0.07 | 0.3 | 0.71 | 0.48 | 0.57 | 1.19 | 0.21 | 0.24 | 0.08 |

Various physical properties of the examples from Table 1 are shown below at Table 3.

**Table 3**

| | Example 1 | Example 2 | Example 3 | Example 4 | Example 5 | Example 6 | Example 7 | Example 8 | Example 9 |
|---|---|---|---|---|---|---|---|---|---|
| **Tensile Testing, Non-activated** | | | | | | | | | |
| Force at break (N) | 210 | NA | NA | NA | 61 | 14 | 37 | NA | NA |
| Displacement at break (mm) | 12 | >274 (did not break) | >274 (did not break) | >275 (did not break) | 37 | 26 | 14 | >274 (did not break) | >275 (did not break) |
| Tensile stress at break (kPa) | 8092 | NA | NA | NA | 2140 | 440 | 1360 | NA | NA |
| Tensile strain (displacement) at Break (%) | 29 | >685 | >684 | >688 | 94 | 66 | 35 | >684 | >687 |
| Max Tensile stress (kPa) | 8200 | 1727 | 3377 | 1231 | 3960 | 3790 | 1544 | 173 | 191 |
| Max Tensile strain (displacement), % | 30 | >685 | >684 | >688 | 95 | 67 | 36 | >684 | >687 |
| Modulus (Young's) (Mpa) | 111 | 4.8 | 28 | 21 | 207 | 44 | 11 | 1.1 | 0.8 |

| **Capillary Rheometer 90 °C** | | | | | | | | | |
|---|---|---|---|---|---|---|---|---|---|
| Viscosity Pa. S at 300/S | 2471 | 1373 | 1861 | 1115 | 4666 | 3981 | 1112 | 534 | 1259 |
| Viscosity Pa.S at 1000/S | 933 | 508 | 1008 | 424 | 1488 | 2039 | 497 | 362 | 583 |
| Shear Thinning | 2.65 | 2.70 | 1.85 | 2.63 | 3.14 | 1.95 | 2.24 | 1.48 | 2.16 |
| | | | | | | | | | |
| Die Swell, through 2.18 mm die at 10 rpm (% increase) | 15% | 40% | 42% | 35% | Not Applicabl e | 47% | 12% | 70% | 89% |

| **DSC Testing, Endotherm (°C) (20 °C per min)** | | | | | | | | | |
|---|---|---|---|---|---|---|---|---|---|
| Onset | 66 | 33 | 35 °C - Tg | 48 °C - Tg | 70 °C - Tg | 87 | 49 | 90 | 34 °C - Tg |
| Peak | 84 | 41 | | | | 93 | 81 | 102 | |

| **DSC Testing, Exotherm (°C)** | | | | | | | | | |
|---|---|---|---|---|---|---|---|---|---|
| Onset | 144 | 157 | 163 | 150 | 162 | 162 | 143 | 153 | 168 |
| Peak | 166 | 170 | 169 | 161 | 173 | 173 | 158 | 163 | 172 |
| Comments: | Very Easy to Extrude into bead. No melt fracturing. | Extrusion is slightly rough but not melt fracturing. | Very Easy to Extrude into bead. No melt fracturing. | Extreme Melt Fracture above 12 RPM | Could barely Extrude. Tough | Very Easy to Extrude into bead. No melt fracturing. | Very Easy to Extrude into bead. No melt fracturing. | Extrudes nicely | Beads are starting to cold flow and mass back together. Melt fracturing below 2.5mm bead |

| **Extrusion Conditions 12" Killion extruder, 1.25"** | | | | | | | | | |
|---|---|---|---|---|---|---|---|---|---|
| Die | 195°F | 200°F | 200°F | 210°F | 190°F | 200°F | 185°F | 190°F | 190°F |

Considering Examples 1-9 and their corresponding properties presented in Tables 2 and 3, it is observed that the materials selected for forming the foamable filaments may be selected so that specific desirable properties and characteristics are present before and/or after foaming. The properties and characteristics selected may depend on whether the filament is formed alone or as a bicomponent fiber, how the filament is incorporated into a final article, the function of article into which the foamable filament is incorporated, and the properties the foamable filament is expected to impart in the finished article.

In one non-limiting example, the foamable filament from Example 1, based on a thermoplastic polyurethane polymer may be preferred when the filament is to be used as a single component filament because of its higher modulus and stress at break prior to activation. Other filaments with lower modulus and stress at break may need to be processed as a bicomponent fiber with the second component supplying the stiffness and strength.

The thermoplastic polyurethane filament of Example 1 as well as the styrene butadiene filament of Example 9 provide a cellular foam after activation with small and uniform cell size. Small and uniform cell size may be preferred in applications for sealing because the many small cells provide a more tortuous path for ingress of foreign material such as water. Small and uniform cell size is also known to improve certain mechanical properties of foamed materials. Examples 1 and 9 provide this similarly small and uniform cell size while providing very different softness values as measured by Asker C hardness. Example 1 has fine cell size with an Asker C hardness of 80 while the filament of Example 9 has an Asker C hardness of 13. Each of these materials may be selected depending on the specific intended use for the filament.

The butadiene-based elastomers of Examples 8 and 9, made with nitrile butadiene rubber and styrene butadiene rubber respectively, are both very soft offering Asker C values of 13 or less. Soft foams of the type demonstrated in Examples 8 and 9 may be preferred for applications involving cushioning and comfort. Additionally, nitrile-based elastomers are known to have excellent resistance to non-polar fluids such as gasoline, diesel fuel and motor oils. As such, foamable filaments of Example 8 may be useful in applications where exposure to these types of fluids may occur.

The thermoplastic polyurethane filament of Example 1 as well as the filament of Example 7 based on a blend of ethylene octene copolymers showed very low die swell offering the possibility of making smaller diameter filaments with less need to draw the material during extrusion of the filament.

Filaments of Example 7 offer a balance of properties with moderate cell size, softness and tensile stress at break. Filaments based on ethylene octene copolymers provide other unique attributes such as the ability to tune the hardness and other attributes of filaments based on this technology are presented in more detail below.

It should be noted that not all polymeric blends could be processed into a filament at thicknesses less than 1 mm as demonstrated by Examples 4 and 5. This may be due at least in part to higher viscosity and/or molecular weight. Example 5 had a higher viscosity at 90 °C and 300 s⁻¹ compared to the other compositions. Example 4 at relatively low viscosity was converted into a film at about 1.5 mm but not at 1 mm or less. Incomplete material compatibility may lead to a non-uniform extrudate including potentially high die swell.

The Examples of Table 1 all activate completely or nearly complete at a temperature of 157 °C (315 °F) for an exposure time of about 15 minutes. Samples incorporating a blowing agent activator activate completely or nearly completely at a temperature of 141 °C (285 °F) for a time of about 12 minutes (in a convection oven). Alternatively, activation may occur in shorter periods of time in a heated platen or other quick heating device. For materials containing a blowing activator, at least partial activation is achieved at temperatures as low as 135 °C (275 °F) or lower. When incorporated into other articles, times and temperatures required for full activation may vary depending on the size and shape of the article and where the foamable filament is incorporated in the article, or how the heat is applied. For example, if the foamable filament is located in an interior of the article and insulated from the surface, higher temperatures or longer times may be required to achieve full activation. Also, all the Examples of Table 1 except for Example 5 can be extruded into a filament at a die temperature of 99 °C (210 °F) or less. This provides an important differential between the temperature needed to process the foamable material into a filament without undesirable pre-activation of the foam and the temperature required for full or nearly full activation.

As described herein, the filaments may be adapted to foam (e.g., activate) upon exposure to a stimulus (e.g., heat, induction, microwave, UV light, moisture or the like). Prior to expansion, the filaments may be soft to the touch and/or flexible in nature, while providing sufficient strength for use in stitching materials as described herein. One or more of these properties may also maintained post-foaming,

In using such activatable materials, it may well be desirable that the processing temperature of the material (e.g., the temperature at which the material is manufactured and applied) be relatively low. Among other benefits, a low processing temperature reduces manufacturing burden. It is useful if processing temperatures fall well below the activation temperature (e.g., at least 4 °C (40 °F) below, at least 16 °C (60 °F) below, or even at least 27 °C (80 °F) below the activation temperature).

For compounding and processing of the foamable composition into a foamable filament at sufficiently low temperatures to avoid premature activation of the material, it may be preferred that the material have sufficiently low viscosity at the temperature where filament formation occurs. For example, it may be preferrable for the polymer composition to have a viscosity measured by capillary rheometer at 300 s⁻¹ and 90 °C of about 4000 Pa.s or less, preferably 3000 Pa.S or less and more preferably 2500 Pa.s or less. Alternatively, it may be preferrable for the polymer composition to have a viscosity measured by capillary rheometer at 1000 s⁻¹ and 90 °C of about 2500 Pa.s or less, preferrable 1500 Pa.s or less and more preferrable 1000 Pa.s or less. It may be beneficial to achieve the necessary viscosity for improved processing if the polymer is shear thinning.

To obtain sufficiently low viscosity at the target filament formation temperature it is desirable that the polymeric materials be processed above the softening point for amorphous material or above or slightly above its melting point for crystalline materials. Thus, it may be desirable for the polymeric material to have a relatively low softening point or melting point. At the same time, the fusion temperature should not be so low such that the filaments aggregate or fuse at ambient temperatures. For example, a preferred polymeric material may be one having a softening point or melting point of less than or about 120 °C, less than or about 100 °C or even less than or about 80 °C. The softening point may correspond roughly to the glass transition temperature of the amorphous materials (e.g., the polymer blend) as reported in Table 3. This result is not unexpected as the glass transition temperature corresponds the change in free volume of the polymer which allows for increased relative molecular motion.

It may further be desirable that the foamable filament be substantially thin. For example, it may be desirable for the foamable filament to be formed at a diameter of 1 mm or less. For formation of the filament at a thin diameter it may be necessary that the material being extruded have minimal or low die swell. Die swell is the result of residual polymer orientation and entanglement as the melt passes through the die. Entropic driving forces may cause the polymeric components to revert to their pre-extruded state resulting in a change in thickness of the extruded filament post-extrusion. Therefore, polymers with lower intrinsic viscosity and having lower molecular weight and therefore lower polymer entanglement may be preferrable for minimizing die swell and obtaining a thin filament. This is observed in Table 3 where the main polymers of Examples 1 and 7, with high thermoplastic character and lower molecular weight, have low die swell of 15% or less. In contrast the higher molecular weight elastomeric polymers that are the main polymers of Examples 8 and 9 have higher die swell of greater than 70%.

For processing the foamable filament into an article by methods such as weaving, knitting or crocheting, the composition of the filament may be selected to have a low coefficient of friction such that the filaments slides easily over itself. While friction can be reduced to some degree by incorporation of an internal slip aid or by treating the filament externally with a slip aid, certain characteristics such as surface roughness may not be sufficiently compensated for by these treatments and may adversely affect processing of the filament. One source of surface roughness for extruded articles is melt fracture. Melt fracture is the result of shear stress occurring during the extrusion process. One means of reducing shear stress that causes melt fracture is to process at higher temperatures. However, this approach is not available with heat activatable materials because of the risk of pre-activation of the material during formation of the filament. Therefore, the composition of the filament may be selected to have a sufficiently low viscosity at the target processing temperature to avoid the shear stresses that cause melt fracture.

The foamable filament composition may include one or more additives for viscosity modification. As one example, an additive may be selected to lower the viscosity of the composition for ease of processing. The viscosity modifying agent may be a liquid. The liquid viscosity modifying additive may be a petroleum based paraffinic processing oil. Oils suitable for use are available under the tradename Sunpar available from Holly Frontier Refining and Marketing, LLC or ParaLux available from Chevron U.S.A., Inc. Alternatively, the viscosity modifying agent can be a low molecular weight, high melt index polymer or copolymer. The low molecular weight polymer may typically have a melt index of at least 400 or more and preferably 800 or more (as measured according to ASTM D1238 at 190 °C and a 2.16 Kg weight). Suitable grades are available under the tradename Affinity GA available from Dow. Ethylene vinyl acetate and ethylene acrylate copolymers are also available that meet these criteria and are suitable for use according to the teachings herein. Alternatively, viscosity may be lowered by incorporation of a wax. When used, the viscosity modifying additive is typically added at a level of 10% or less by weight and more preferably 5% or less by weight. The low molecular weight additive, whether a liquid or solid, may also function to plasticize the foamable filament composition before and/or after the foaming process.

The foamable filament composition may contain a heat activated physical or chemical foaming agent. The foaming agent may be selected so that it remains substantially unchanged during the compounding and forming or the foamable filament but changes size or releases gas at a temperature near to or at the foaming temperature of the filament. The foaming agent may remain substantially unchanged preferably up to a temperature of about 100 °C, but may begin to foam or release gas at a temperature of 110 °C or even 135 °C. Examples of physical foaming agents that may be suitable for use in the invention are available under the tradename Expancel, available from Nouryon, Inc. The composition may contain a chemical foaming agent. The chemical foaming agent may be an endothermic or exothermic foaming agent. Endothermic foaming agents absorb heat from the matrix during activation while exothermic foaming agents release heat. Endothermic foaming agents include metal salts of the carbonate and bicarbonate ion. Endothermic foaming agents suitable for use in the current invention are available under the tradename Kycerol available from Rit-Chem, and Hydrocerol available from Clariant. The foamable filament composition may contain an exothermic foaming agent. Exothermic foaming agents suitable for use in the invention include dinitrosopentamethylenetetramine, azodicarbonamides, p-toluene sulfonyl hydrazide, or p,p'-oxybis(benezensulfonylhydrazide).

The type and amount of foaming agent may be selected based on the desired activation temperature for causing the filament to foam and the level of volume increase (or density decrease) desired. For example, p,p'-oxybis(benezensulfonylhydrazide) may be selected as a foaming agent when low to moderate foaming temperature is desired (a temperature in the range of about 135 °C to about 160 °C). The amount of foaming agent may depend upon the type of foaming agent used and level of desired volume increase but will typically be in range of about 0.2% to 15%, or even from 1.5 to 6% by weight of the total filament composition.

Optionally a foaming agent activator may be utilized to lower the onset temperature for gas release from the foaming agent. The amount and type of activator may depend on the type of chemical foaming agent (e.g., blowing agent) used. For azodicarbonamide blowing agents, zinc oxide and zinc or calcium salts may function as activators. A preferred activator for azodicarbonamide blowing agents is the zinc salt of benzene sulfonic acid. A preferred activator for p-toluene sulfonyl hydrazide, and/or p,p'-oxybis(benezensulfonylhydrazide) is urea. The foaming agent activator, if used, will typically be less than 5% by weight, preferably less than 3% and more preferably less than 1% by weight of the total foamable filament composition.

Lowering the activation point of the foaming process by selection of a low activation temperature blowing agent or by addition of a blowing agent activator is desirable when the filament is to be foamed after incorporation into an article containing heat sensitive materials. The lower activation temperature allows for activation without degradation such as melting, warping, oxidation, or discoloration of other components of the article in which the filament is contained. For example, a filament having a lower activating temperature may allow for utilization with a broader range of materials. This is particularly important when combined with non-synthetic fibers, fabrics, and textiles. Specific examples include cotton, wool, hemp, silk, bamboo, linen, polyester, rayon, Nylon, spandex, and other textiles frequently used for clothing, shoes, bedding, and athletic equipment.

The ability to produce a foamable filament with a low temperature activation temperature presents particular challenges in view of the need for a lower viscosity to efficiently and effectively produce a fine filament without causing pre-activation of the foaming agent. In non-activatable systems, increasing temperature is a common approach to lowering viscosity to speed through put or to eliminate problems with die swell or melt fraction as discussed above. Materials according to the current teachings may be selected so that they are sufficiently low in viscosity at a temperature that allows processing into a filament without causing pre-activation of the foaming agent. The low viscosity required to meet these challenging processing requirements is achieved through selection of intrinsically low viscosity materials, through carefully selected additives or a combination of these approaches. Materials according to the current teachings may also maintain sufficiently low activation temperature such that the foaming process can occur without causing damage to other components with which the foamed filament is being used. This is important because it is anticipated that the foamable filament is likely to be used as only one component in an assembly or construction, although it could be used on its own if desired, or with other foamable filaments.

It is possible that a physical blowing agent (e.g., foaming agent) or a combination of a physical and foaming agent may be utilized when a non-glossy or matte finish is desired for the activated and expanded filament. As one non-limiting example, physical blowing agents may act to matte the surface due to the fact that the spheres of the blowing agent on the surface, and just below the surface, expand to deflect the light into a random pattern. The amount of blowing agent that may be required for matting purposes may be from about 0.5% to 4% by weight.

Particular polymeric materials that can be utilized according to the teachings herein include metallocene catalyzed polymerized copolymers of ethylene and higher molecular weight olefin monomers such as propylene, butene, hexene and octene. Polymers of this type that may be suitable for use in accordance with the teachings herein are products available under the tradenames Engage, Versify and Affinity available from Dow Polymers and Exxact available from ExxonMobile. The polymeric component typically comprises from about 50% to about 90% or more and preferably between 60% and 80% by weight of the foamable filament composition.

The foamable filament composition may optionally include a heat activated crosslinking agent capable of creating bonds between individual polymer chains. Like the heat activated foaming agent, the heat activated crosslinking agent remains unreacted at temperatures used for compounding and forming of the foamable filament composition, for example, up to temperatures of 100 °C or higher. The heat activated crosslinking agent may react to cross-link the polymers at temperatures near or above the activation temperature of activation of the blowing agent. The heat activated cross-linking agent may be an organic peroxide with an extremely long half-life at room temperature but with a substantial shorter half-life at elevated temperature. Organic peroxides suitable for use in the invention include but are not limited to dicumyl peroxide, di(tert-butyl peroxy isopropyl) benzene, butyl 4,4-di(tert-butylperoxy)valerate, tert-butyl peroxy benzoate or 1,1-di(tert-butylperoxy)-3,3,5-trimethylcyclohexane. The organic peroxide can be used neat or supplied on a carrier. Organic peroxides that may be suitable are available under the tradenames Trigonox and Perkadox available from Nouryon and under the tradenames Luperox, Dicup and Vulcup available from Arkema. When used neat or on a carrier, the active organic peroxide may typically be present at less than 5%, preferably less than 4% and more preferably less than 1% active peroxide of the total weight of the foamable filament composition. Any composition incorporating a cross linking agent may be more stable at elevated temperatures following activation and foaming with less tendency to deform or flow when subsequently reheated, for example, if incorporated into an article that may be washed in hot water and dried using heat. The heat activated crosslinking agent may help the filament to trap gas during activation of the foaming agent. The heat activated crosslinking agent may also help to improve certain properties of the foamable filament material in the foamed state such as improve strength or improved abrasion resistance.

It may be preferrable for the foamable filament to not contain a heat activated curing agent due to odor caused by the curing agent. Also, materials that remain substantially thermoplastic through the foaming process, i.e., no crosslinking agent, may be easier to recycle if necessary or desirable.

The foamable filament composition may optionally include a cross-linking coagent. The coagent may function to increase the degree of crosslinking in the system and may also reduce the time and temperature necessary for crosslinking to occur. Compounds suitable as coagents typically have carbon-carbon double bonds which react readily with free-radicals generated by the organic peroxide crosslinker. The coagent may be monofunctional (containing one double bond), difunctional (containing two double bonds), or multifunctional (containing three or more double bonds). The double bonds may be present as vinyl groups, allylic groups, acrylates or methacrylates. The coagent may be a liquid or a solid. One suitable coagent is zinc diacrylate available under the tradename Dymalink available from Cray Valley. When used, the coagent may typically be present at less than about 5%, or even less than about 3% of the total weight of the foamable filament composition.

The foamable filament composition may optionally include one or more inert particulate components. Such inert particulates may interact physically with the remaining composition but will undergo no chemical reactivity with the other components of the foamable filament composition. The particulate component may be capable of altering the properties of the foamable filament. For example, the particulate component may increase the apparent modulus of the polymeric component of the foamable filament composition. They may reduce the tactile tackiness of the formed fiber or filament and affect surface gloss. Useful particulate components include but are not limited to talc, felspar, wollastonite, mica, clay or limestone. The maximum particle size of the particulate component that can be used may be limited by the diameter of the filament to be manufactured. Preferably, the diameter of the particulate component is less than one twentieth (1/20^{th}) of the diameter of the unfoamed filament diameter and more preferably less than one one thousandth (1/1000^{th}) of the diameter of the unfoamed filament diameter.

Other optional additives to the foamable filament composition include dyes, pigments, hydrocarbon resins, anti-oxidants, UV absorbers, light stabilizer and flame retardants. Although improved UV resistance can be achieved through addition of additives, for applications requiring a high degree of UV resistance, it may be preferrable that the polymeric composition be based solely or primarily on aliphatic polymeric materials and be free of any aromatic polymers or additives.

The hardness of the resulting foamed filament compositions may be tuned and can be readily measured and compared using Asker Durometer measurements or via mechanical testing by measuring load displacement. This is particularly demonstrated with the use of ethylene octene copolymers. The hardness is readily tuned by selection of the crystallinity which can be correlated to a density of the metallocene copolymer or copolymers combined with the amount of volume expansion during foaming. Example filaments are formed with the components listed below at Table 4 and the associated density and Asker C foam hardness are measured with the results shown at Table 1. Melt index as shown in Table 4 for various ethylene octene-containing compositions is measured in accordance with ASTM 1238 (2.16 kg weight at 190 °C).

**Table 4**

| Ethylene Octene Density of 0.885 g/cm³/melt index 30 g/10 mins | Ethylene Octene Density of 0.864 g/cm³/melt index 13 g/10 mins | Ethylene Octene Density of 0.857 g/cm³/melt index 1 g/10 mins | Density | Asker C Foam Hardness |
|---|---|---|---|---|
| Neat | | | **0.20 g/cm3** Expanded Foam Density | 50 |
| Neat | | | **0.13 g/cm3** Expanded Foam Density | 35 |
| 1.4 part | 1 part | | **0.20 g/cm3** Expanded Foam Density | 41 |
| 1.4 part | 1 part | | **0.13 g/cm3** Expanded Foam Density | 28 |
| 1.4 part | | 1 part | **0.20 g/cm3** Expanded Foam Density | 34 |
| 1.4 part | | 1 part | **0.13 g/cm3** Expanded Foam Density | 23 |

For example, a foamable filament composition providing an Asker C hardness of 45 ± 5 after foaming can be obtained using two ethylene octene copolymers of density 0.885 and 0.864 in a ratio of approximately 3:1 and a volume increase of 350%. In comparison for example, a foamable filament composition providing an Asker C hardness of 20 ± 5 after foaming can be obtained using the same ethylene octene copolymers of density 0.885 and 0.864 in a ratio of approximately 1:2 and a volume increase of 500%.

Water absorption can also be measured to determine the amount of water absorption of various filaments post activation (post-baking at 285 °F). Results are shown below at Table 5. While the materials tested below are at least partially or substantially open cell foams, the level of water absorption is still minimal.

**Table 5**

| | Water Abs by wt. % |
|---|---|
| **L-2803 Commercial closed cell foam material** Foam Density 0.24 g/ml Asker C Hardness 38 - as foamed | **0.46** |
| **L-2803 Commercial closed cell foam material** Foam Density 0.24 g/ml Asker C Hardness 38 with ends trimmed | **1.39** |
| **Material According to the Invention:** Foam Density 0.24 g/ml Asker C Hardness 45 - as foamed | **0.32** |
| **Ethylene Octene-based Material According to the Invention:** Foam Density 0.24 g/ml Asker C Hardness 45 - with ends trimmed | **0.95** |

Table 5 shows water absorption data for a foam filament material made according to the teachings herein along with a comparison to a commercially available closed cell foam material, L-2803, available from L&L Products, Inc. Tests were made after foaming of both products with the appropriate amount of time and temperature.

**Table 6**

| **Compression Temperature** | Compression Duration, 22hrs Compression, 50% Recovery, 30 minutes | L-2803 | Foamable Filament Material (ethylene octene material) |
|---|---|---|---|
| **21°C (70°F)** | Initial Thickness, mm | 22.90 | 18.50 |
| | Final Thickness, mm | 18.81 | 16.08 |
| | **Result, % Change** | **17.85** | **13.05** |
| **43°C (110°F)** | Initial Thickness, mm | 22.99 | 18.92 |
| | Final Thickness, mm | 12.80 | 13.42 |
| | **Result, % Change** | **44.31** | **29.08** |
| **54°C (130°F)** | Initial Thickness, mm | 22.61 | 19.03 |
| | Final Thickness, mm | 12.35 | 12.93 |
| | **Result, % Change** | **45.40** | **32.04** |

Table 6 compares the compression set of a foamable filament material in accordance with the present teachings with the closed cell L-2803 material referenced in Table 5. The compression set was measured in accordance with ASTM D3574-17 Test D.

It may be desirable that the filament after foaming consists of small and uniform cell structure. Closed cell foams with uniform cell structure are known to have improved mechanical properties. For open cell foams, a finer cell structure creates a more tortuous patch for ingress of foreign material such as water.

The foamable filament composition can be compounded in common melt compounding equipment such as a Banbury or Shaw internal rubber mixers or a sigma blade double arm mixer. Preferably, the material is mixed in a continuous process such as a twin-screw extruder or a single-screw extruder with mixing elements incorporated into the screw design. The twin-screw extruder maybe be counter rotating or corotating. Processing conditions should be selected to maintain a temperature near or slightly above the melting point of the polymeric components but below the activation temperatures of both the blowing and, if present, the cross-linking agent. If produced in batches, the foamable filament composition is converted into pellets or chunks for subsequent processing into filament. Material may be formed into pellets through an underwater pelletizing or strand pelletizing operation or shredded into irregular pieces. It may also be formed by sheet forming and subsequent cutting. If produced in a continuous mixing process, the material can be converted directly to filament through a die with single or multiple openings to form filament or may be converted into pellets for subsequent processing into filament.

The foamable filament composition can be converted subsequently into filament in a single screw extruder fitted with an extrusion die. The single screw extruder provides efficient pumping of polymer melt with minimal surging, providing the ability to produce consistent filament diameter. Processing may occur at or slightly above the melting or softening points of the polymers and below the activation temperature of blowing and cross-linking additives. The extrusion die may have a single opening providing a single filament or multiple openings providing multiple filaments that may be wound separately or bundled for further processing. Filament diameters according to the present teachings may be in the range of 0.1 mm or less to 1.5 mm or more, and preferably between 0.8 and 1.2 mm.

The foamable filament of the current teachings can be formed into a fabric or article via conventional methods such as by weaving, knitting, crocheting, braiding, various non-woven methods, or 3-D printing, or used as part of a non-woven product. Alternatively, the foamable filament may be inlaid into an existing cloth or fabric. Following formation of an article of a desired size and shape, the foamable filaments may be activated to foam and optionally crosslink. The foamable filament composition can be activated by heat to form its foamed structure at moderate temperatures. Preferably, the temperature to foam the filament is less than 165 °C, more preferably less than 150 °C or less, and even more preferably less than 140 °C. The temperature where the material foams is controlled by the selection of blowing agent, blowing agent activators when utilized and cross-linking agents when desired. Matching polymer melt and viscosity as a function of temperature characteristics to the blowing agent decomposition temperature range may assist in the production of desirable foamed filaments.

Upon foaming, the density of the filament composition may decrease from about 1 g/cm³ to about 0.25 g/cm³ or less and may decrease to 0.05 g/cm³ or lower depending upon the type and amount of foaming agent used coupled with the polymer rheology at the decomposition temperature range. The resulting foam structure may be at least partially or substantially open cell. This is evident from the rapid and easy expulsion of gases from the cells when the foam is compressed and can be observed by the formation of bubbles when the foam is compressed under water.

A cross section view of an example polymeric foamed filament prior to and after activation is shown at Figure 1. The single polymer or polymer blend 10 shown prior to activation includes a plurality of blowing agent particles 12 prior to activation of the blowing agent. After activation, the single polymer or polymer blend 10 includes cells of trapped gasses 14 formed as a result of activation of the blowing agent.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "x parts by weight of the resulting polymeric blend composition" also contemplates a teaching of ranges of same recited amount of "x in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components or steps identified, and such other elements ingredients, components or steps that do not materially affect the basic and novel characteristics of the combination.

The use of the terms "comprising" or "including" to describe combinations of elements, ingredients, components or steps herein also contemplates embodiments that consist essentially of, or even consists of, the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps. All references herein to elements or metals belonging to a certain Group refer to the Periodic Table of the Elements published and copyrighted by CRC Press, Inc., 1989. Any reference to the Group or Groups shall be to the Group or Groups as reflected in this Periodic Table of the Elements using the IUPAC system for numbering groups.

It will be appreciated that concentrates or dilutions of the amounts recited herein may be employed. In general, the relative proportions of the ingredients recited will remain the same. Thus, by way of example, if the teachings call for 30 parts by weight of a Component A, and 10 parts by weight of a Component B, the skilled artisan will recognize that such teachings also constitute a teaching of the use of Component A and Component B in a relative ratio of 3:1. Teachings of concentrations in the examples may be varied within about 25% (or higher) of the stated values and similar results are expected. Moreover, such compositions of the examples may be employed successfully in the present methods.

It is understood that the above description is intended to be illustrative and not restrictive. Many embodiments as well as many applications besides the examples provided will be apparent to those of skill in the art upon reading the above description. The scope of the teachings should, therefore, be determined not with reference to the above description, but should instead be determined with reference to the appended claims.

It is understood that the above description is intended to be illustrative and not restrictive. Many embodiments as well as many applications besides the examples provided will be apparent to those of skill in the art upon reading the above description.

The explanations and illustrations presented herein are intended to acquaint others skilled in the art with the invention, its principles, and its practical application. Those skilled in the art may adapt and apply the teachings in their numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims.

## Claims

1. A foamable filament composition comprising:
a single polymer or blend of polymers selected from the group comprising: ethylene octene copolymers, thermoplastic polyurethanes, ethylene propylene diene monomer rubber, styrene-isoprene block copolymers, poly(styrene-butadiene-styrene), styrene-ethylene-butylene-styrene, nitrile rubber, styrene butadiene rubber, or combinations thereof; and
a foaming agent having an activation temperature from 110 °C to 200 °C;
wherein the single polymer or blend of polymers has a sufficient molecular weight to allow for polymer chain entanglement; and
wherein the single polymer or blend of polymers is melt-processable at a temperature sufficiently below the activation temperature of the foaming agent for forming a resulting filament to avoid foaming activation during filament formation.

2. The composition of claim 1, wherein the single polymer or blend of polymers is melt processable at temperatures of less than 204 °C (400 °F), less than 177 °C (350 °F), less than 149 °C (300 °F), or even less than 104 °C (220 °F).

3. The composition of any of the preceding claims, wherein the resulting filament has an Asker C foamed hardness of from 5 to 60.

4. The composition of any of the preceding claims, wherein the resulting filament has an Asker C foamed hardness of from 20 to 60.

5. The composition of any of the preceding claims, wherein the activation temperature of the foaming agent is from 135 °C to 160 °C.

6. The composition of any of the preceding claims, wherein the resulting filament has a diameter in the range of from 0.1 mm to 1.5 mm.

7. The composition of any of the preceding claims, wherein the resulting filament is at least partially or substantially an open cell material.

8. The composition of any of the preceding claims, wherein the composition includes a particulate component and the particulate component has a diameter that is between one fifth (1/5^{th}) of the diameter of the unfoamed filament diameter and one twentieth (1/20^{th}) of the diameter of the unfoamed filament diameter.

9. The composition of any of the preceding claims, wherein the single polymer or blend of polymers has a softening point of less than 120 °C, less than 100 °C, or less than 80 °C.

10. The composition of any of the preceding claims, wherein the single polymer or blend of polymers include metallocene catalyzed polymerized copolymers of ethylene and higher molecular weight olefin monomers selected from propylene, butene, hexene and octene.

11. The composition of any of the preceding claims, wherein the compression set of the composition is from 10% to 15% change at 21 °C as measured in accordance with ASTM D3574-17 Test D.

12. The composition of any of the preceding claims, wherein the compression set of the composition is from 28% to 32% change at 43 °C as measured in accordance with ASTM D3574-17 Test D.

13. The composition of any of the preceding claims, wherein the compression set of the composition is from 30% to 38% change at 54 °C as measured in accordance with ASTM D3574-17 Test D.

14. The composition of any of the preceding claims, wherein the amount of foaming agent utilized is from 0.5% to 4% by weight.

15. A method of manufacturing a foamable filament, including melt compounding the composition of any of the preceding claims and extruding the composition to form the foamable filament.

## Patentansprüche

1. Schäumbare Filamentzusammensetzung umfassend:
ein einzelnes Polymer oder Gemisch von Polymeren ausgewählt aus der Gruppe umfassend: Ethylen-Octen-Copolymere, thermopastische Polyurethane, Ethylen-Propylen-Dien-Monomer-Kautschuk, Styrol-Isopren-Blockcopolymere, Poly(Styrol-Butadien-Styrol), Styrol-Ethylen-Butylen-Styrol, Nitrilkautschuk, StyrolButadien-Kautschuk und Kombinationen davon; und
ein Treibmittel mit einer Aktivierungstemperatur von 110 °C bis 200 °C;
wobei das einzelne Polymer oder Gemisch von Polymeren ein ausreichendes Molekulargewicht aufweist, um Polymerkettenverschlingung zu ermöglichen; und
wobei das einzelne Polymer oder Gemisch von Polymeren bei einer Temperatur schmelzverarbeitbar ist, die ausreichend unter der Aktivierungstemperatur des Treibmittels liegt, um ein erhaltenes Filament zu bilden, um Schäumaktivierung während der Filamentbildung zu vermeiden.

2. Zusammensetzung gemäß Anspruch 1, wobei das einzelne Polymer oder Gemisch von Polymeren bei Temperaturen von niedriger als 204 °C (400 °F), niedriger als 177 °C (350 °F), niedriger als 149 °C (300 °F) oder sogar niedriger als 104 °C (220 °F) schmelzverarbeitbar ist.

3. Zusammensetzung gemäß einem der vorstehenden Ansprüche, wobei das erhaltene Filament eine Asker-C-Schaumstoffhärte von 5 bis 60 aufweist.

4. Zusammensetzung gemäß einem der vorstehenden Ansprüche, wobei das erhaltene Filament eine Asker-C-Schaumstoffhärte von 20 bis 60 aufweist.

5. Zusammensetzung gemäß einem der vorstehenden Ansprüche, wobei die Aktivierungstemperatur des Treibmittels von 135 °C bis 160 °C beträgt.

6. Zusammensetzung gemäß einem der vorstehenden Ansprüche, wobei das erhaltene Filament einen Durchmesser in dem Bereich von 0,1 mm bis 1,5 mm aufweist.

7. Zusammensetzung gemäß einem der vorstehenden Ansprüche, wobei das erhaltene Filament wenigstens teilweise oder im Wesentlichen ein offenzelliges Material ist.

8. Zusammensetzung gemäß einem der vorstehenden Ansprüche, wobei die Zusammensetzung eine partikelförmige Komponente enthält und die partikelförmige Komponente einen Durchmesser aufweist, der zwischen einem Fünftel (1/5) des Durchmessers des nichtgeschäumten Filaments und einem zwanzigstel (1/20) des Durchmessers des nichtgeschäumten Filaments beträgt.

9. Zusammensetzung gemäß einem der vorstehenden Ansprüche, wobei das einzelne Polymer oder Gemisch von Polymeren einen Erweichungspunkt von weniger als 120 °C, weniger als 100 °C oder weniger als 80 °C aufweist.

10. Zusammensetzung gemäß einem der vorstehenden Ansprüche, wobei das einzelne Polymer oder Gemisch von Polymeren metallocenkatalysiert-polymerisierte Copolymere von Ethylen und Olefinmonomeren mit höherem Molekulargewicht ausgewählt aus Propylen, Buten, Hexen und Octen enthält.

11. Zusammensetzung gemäß einem der vorstehenden Ansprüche, wobei der Druckverformungsrest der Zusammensetzung von 10 % bis 15 % Veränderung bei 21 °C, wie gemessen gemäß ASTM D3574-17, Test D, beträgt.

12. Zusammensetzung gemäß einem der vorstehenden Ansprüche, wobei der Druckverformungsrest der Zusammensetzung von 28 % bis 32 % Veränderung bei 43 °C, wie gemessen gemäß ASTM D3574-17, Test D, beträgt.

13. Zusammensetzung gemäß einem der vorstehenden Ansprüche, wobei der Druckverformungsrest der Zusammensetzung von 30 % bis 38 % Veränderung bei 54 °C, wie gemessen gemäß ASTM D3574-17, Test D, beträgt.

14. Zusammensetzung gemäß einem der vorstehenden Ansprüche, wobei die Menge an eingesetztem Treibmittel von 0,5 Gew.-% bis 4 Gew.-% beträgt.

15. Verfahren zur Herstellung eines schäumbaren Filaments, umfassend Schmelzcompoundieren der Zusammensetzung gemäß einem der vorstehenden Ansprüche und Extrudieren der Zusammensetzung, um das schäumbare Filament zu bilden.

## Revendications

1. Composition de filament moussable comprenant
un unique polymère ou un mélange de polymères choisis dans le groupe comprenant : des copolymères d'éthylène octène, des polyuréthanes thermoplastiques, un caoutchouc de monomères d'éthylène propylène diène, des copolymères à blocs de styrène-isoprène, un poly(styrène-butadiène-styrène), un styrène-éthylène-butylène-styrène, un caoutchouc de nitrile, un caoutchouc de styrène butadiène ou des combinaisons correspondantes ; et
un agent de moussage ayant une température d'activation de 110 °C à 200 °C ;
l'unique polymère ou le mélange de polymères ayant un poids moléculaire suffisant pour permettre un enchevêtrement de chaînes polymères ; et
l'unique polymère ou le mélange de polymères étant transformable à l'état fondu à une température suffisamment en dessous de la température d'activation de l'agent de moussage pour former un filament résultant pour éviter une activation de moussage pendant la formation de filament.

2. Composition selon la revendication 1, l'unique polymère ou le mélange de polymères étant transformable à l'état fondu à des températures inférieures à 204 °C (400 °F), inférieures à 177 °C (350 °F), inférieures à 149 °C (300 °F), ou même inférieures à 104 °C (220 °F).

3. Composition selon l'une quelconque des revendications précédentes, le filament résultant ayant une dureté à l'état moussé Asker C allant de 5 à 60.

4. Composition selon l'une quelconque des revendications précédentes, le filament résultant ayant une dureté à l'état moussé Asker C allant de 20 à 60.

5. Composition selon l'une quelconque des revendications précédentes, la température d'activation de l'agent de moussage étant de 135 °C à 160 °C.

6. Composition selon l'une quelconque des revendications précédentes, le filament résultant ayant un diamètre dans la plage allant de 0,1 mm à 1,5 mm.

7. Composition selon l'une quelconque des revendications précédentes, le filament résultant étant au moins partiellement ou sensiblement un matériau à cellules ouvertes.

8. Composition selon l'une quelconque des revendications précédentes, la composition comprenant un composant particulaire et le composant particulaire ayant un diamètre qui est entre un cinquième (1/5^{e}) du diamètre du diamètre de filament non moussé et un vingtième (1/20^{e}) du diamètre du diamètre de filament non moussé.

9. Composition selon l'une quelconque des revendications précédentes, l'unique polymère ou le mélange de polymères ayant un point de ramollissement inférieur à 120 °C, inférieur à 100 °C, ou inférieur à 80 °C.

10. Composition selon l'une quelconque des revendications précédentes, l'unique polymère ou le mélange de polymères comprenant des copolymères polymérisés catalysés par un métallocène d'éthylène et de monomères d'oléfine à poids moléculaire plus élevé choisis parmi le propylène, le butène, l'hexène et l'octène.

11. Composition selon l'une quelconque des revendications précédentes, la déformation permanente après compression de la composition étant un changement de 10 % à 15 % à 21 °C telle que mesurée conformément à la norme ASTM D3574-17 test D.

12. Composition selon l'une quelconque des revendications précédentes, la déformation permanente après compression de la composition étant un changement de 28 % à 32 % à 43 °C telle que mesurée conformément à la norme ASTM D3574-17 test D.

13. Composition selon l'une quelconque des revendications précédentes, la déformation permanente après compression de la composition étant un changement de 30 % à 38 % à 54 °C telle que mesurée conformément à la norme ASTM D3574-17 test D.

14. Composition selon l'une quelconque des revendications précédentes, la quantité d'agent de moussage utilisé étant de 0,5 % à 4 % en poids.

15. Procédé de fabrication d'un filament moussable, comprenant un compoundage en fusion de la composition selon l'une quelconque des revendications précédentes et une extrusion de la composition pour former le filament moussable.
